# EUROPEAN PATENT APPLICATION

(11) **EP 1 186 965 A2**
(43) Date of publication of application: **13.03.2002**
(21) Application number: 01121603.3
(22) Date of filing: 11.09.2001
(51) Int. Cl.: G03H 1/02

(54) **Metallic hologram**

(30) Priority: 12.09.2000 JP 2000276361
(71) Applicant: DAINIPPON INK AND CHEMICALS, INC., Itabashi-ku Tokyo (JP)
(72) Inventor: Danda, Yutaka, Takatsuki-shi, Osaka (JP); Fujii, Takashi, Takatsuki-shi, Osaka (JP); Satake, Tomoo, Takatsuki-shi, Osaka (JP)
(74) Representative: Weisert, Annekäte, Dipl.-Ing. Dr.-Ing.

(57) **Abstract**

The invention provides a partial metallic hologram wherein a light reflecting layer is formed easily at a low price and the light reflecting layer and the hologram region are formed in a pattern having an arbitrary shape, and a method of producing the same. A metallic hologram comprises a light reflecting layer, wherein the light reflecting layer is formed by coating or printing with a high brightness coating agent.

## Description

### BACKGROUND OF THE INVENTION

### 1. FIELD OF THE INVENTION

The present invention relates to a metallic hologram having a light reflecting layer which is formed by coating with a high brightness coating agent, and a method of producing the same.

### 2. DESCRIPTION OF RELATED ART

Recently, as a measure to counter forgery of credit cards, a portion of the cards is provided with a hologram region or the entire surface of cards made as a hologram to enhance the design properties of the cards. Typical examples of the holograms used for these purposes include metallic holograms having a light reflecting layer. The metallic hologram is generally formed by laminating the surface opposite the hologrammed surface of a transparent plastic film having one hologrammed surface on one surface of a base film such as a transparent polyester film to form a hologram sheet and depositing aluminum on the hologram surface to form a light reflecting layer.

In the case of depositing aluminum, a varnish, which serves as a mask, must be printed on the hologram surface to perform window opening processing of the deposited portion. However, since the fine grooves, which function as a diffraction lattice formed on the hologram surface, are filled with the varnish as a result of printing of the varnish, the hologram function disappears. Accordingly, aluminum must be deposited on the entire surface of the hologram sheet, resulting in restriction of the design. Furthermore, low productivity of the aluminum deposition can cause high costs.

### BRIEF SUMMARY OF THE INVENTION

An object of the present invention is to provide a partial metallic hologram wherein a light reflecting layer is formed easily at a low price and the light reflecting layer and the hologram region are formed in a pattern having an arbitrary shape, and a method of producing the same.

The present inventors have found that a light reflecting layer having the same brightness as that of a deposited layer of aluminum can be formed by coating or printing with a high brightness coating agent on the hologrammed surface of a hologram sheet, and thus solved the problems described above.

According to the present invention, it is possible to form a metallic hologram, which could have hitherto been formed only by aluminum deposition, by coating or printing with a high brightness coating agent. As a result, a metallic hologram having a large area can be mass-produced quickly at a low cost. The present invention exerts a remarkable effect of forming, on the same face of the hologram sheet, (i) a metallic hologram region having a light reflecting layer, (ii) a transparent hologram region having no light reflecting layer, (iii) a transparent region having neither a light reflecting layer, nor a hologram function and (iv) a metallic region having a light reflecting layer and no hologram function at an arbitrary position and with an arbitrary shape by using a printing plate, thereby noticeably improving the freedom of design.

### DETAILED DESCRIPTION OF THE INVENTION

The metallic hologram of the present invention and the method of producing the same will now be described in detail.

### 1. High brightness coating agent

The high brightness coating agent used in the present invention is composed of metal thin film flinders, a binder resin, additives and a solvent. Metallic powders are commonly used in the metallic coating agent. When using metal thin film flinders, metal thin film flinders are oriented parallel to the coated surface when the coating agent is coated or printed, thereby providing a high brightness, mirror-like metalic luster that cannot be obtained by using conventional metal powders.
(1) Metal thin film flinders
   As the metal of the metal thin film flinders, for example, aluminum, gold, silver, copper, brass, titanium, chromium, nickel, nickel-chromium, and stainless steel can be used. In the case of metals having a low melting point, such as aluminum, a thin film can be formed by deposition. In the case of metals having malleability, such as aluminum, gold, silver, and copper, a foil can be formed. In the case of metals having a high melting point and no malleability, a thin film can be formed by sputtering. The thickness of the metal thin film is preferably within a range from 0.01 to 0.1 µm, and more preferably from 0.03 to 0.08 µm. The length of the face of the metal thin film flinders to be dispersed in the coating agent is preferably within a range from 5 to 25 µm, and more preferably from 10 to 15 µm. When the size is less than 5 µm, the brightness of the coating film becomes insufficient. On the other hand, when the size exceeds 25 µm, the brightness is reduced because the metal thin film flinders are less likely to be oriented. Also, if the high brightness coating agent is coated by the gravure or screen printing method, clogging of the printing plate is likely to occur.
   The method of producing the metal thin film flinders will now be described, based on the deposition method.
   As a support film on which the metal is deposited, for example, a polyolefin film and a polyester film can be used. First, a release layer is formed on the support film by coating, and then the metal is deposited onto the release layer at a predetermined thickness. To prevent oxidation, a top coat layer is coated onto the surface of the deposited layer. The same coating agent can be used to form the release layer and the top coat layer.
   The resin used in the release layer or the top coat layer is not specifically limited. Specific examples thereof include cellulose derivative, acrylic resin, vinyl resin, polyamide, polyester, EVA resin, chlorinated polypropylene, chlorinated EVA resin, and petroleum resin. As the solvent, for example, it is possible to use aromatic hydrocarbons (e.g., toluene, xylene, etc.), aliphatic or alicyclic hydrocarbons (e.g., n-hexane, cyclohexane, etc.), esters (e.g., ethyl acetate, propyl acetate, etc.), alcohols (e.g., methanol, ethanol, isopropyl alcohol, etc.), ketones (e.g., acetone, methyl ethyl ketone, etc.), and alkylene glycol monoalkyl ethers (e.g., ethylene glycol monoethyl ether, propylene glycol monomethyl ether, etc.).
   The metal-deposited film is dipped into a solvent, which dissolves the release layer and the top coat layer, and stirred. After the metal-deposited film is removed from the support film, the solution is further stirred, thereby to reduce the size of the metal thin film flinders to about 150 µm, and the metal thin film flinders are collected by filtration and then dried.
   The solvent is not specifically limited as far as it dissolves the resin used in the release layer and the top coat layer.
   Also, if the metal thin film is made by sputtering, the metal thin film flinders can be obtained in the same manner as described above. When using the metal foil, it may be ground to a predetermined size using a stirrer while the metal foil is in a solvent.
   To enhance the dispersibility in the high brightness coating agent, the metal thin film flinders are preferably surface-treated. Examples of the surface treating agent include organic fatty acids such as stearic acid, oleic acid, or palmitic acid; and cellulose derivatives such as methylsilyl isocyanate, nitrocellulose, cellulose acetate propionate, cellulose acetate butyrate, or ethylcellulose. The method used to make the surface of the metal thin film flinders adsorb the surface treating agent can be a publicly known conventional method.
(2) Binder resin
   The binder resin can be one which is commonly used in conventional coating compositions, gravure ink, flexographic ink, or screen ink. Specific examples thereof include (meth)acrylic resin, polyester, polyamide, polyurethane, urea resin, melamine resin, epoxy resin, rosin-modified maleic acid resin, petroleum resin, polystyrene, styrene-maleic acid resin, shellac, and alkyd resin.
(3) Additives
   In the high brightness coating agent of the present invention, there can be used various additives which are used in conventional coating compositions, gravure ink, flexographic ink, or screen ink, if necessary. Examples of the additive include coloring pigments, dyes, waxes, plasticizers, levelling agents, surfactants, dispersants, defoamers, and chelating agents.
(4) Solvent
   As the solvent used in the high brightness coating agent of the present invention, for example, there can be used publicly known conventional solvents which are used in conventional coating compositions, gravure ink, flexographic ink, or screen ink. Specific examples thereof include aromatic hydrocarbons (e.g., toluene, xylene, etc.), aliphatic or alicyclic hydrocarbons (e.g., n-hexane, cyclohexane, etc.), esters (e.g., ethyl acetate, propyl acetate, etc.), alcohols (e.g., methanol, ethanol, isopropyl alcohol, etc.), ketones (e.g., acetone, methyl ethyl ketone, etc.), and alkylene glycol monoalkyl ethers (e.g., ethylene glycol monoethyl ether, propylene glycol monomethyl ether, etc.).
(5) Method of preparing high brightness coating agent

To stably disperse ingredients into a coating agent in general, the ingredients are milled by using a roll mill, a ball mill, a bead mill, or a sand mill to form fine particles of pigments and other additives having sub-micron sizes.

However, in the high brightness coating agent of the present invention, the metal thin film flinders formulated to achieve a metallic luster must have a size within a range from 5 to 25 µm. The metal thin film flinders are converted into fine particles by milling, thereby drastically lowering the metallic luster. Accordingly, in the present invention, the ingredients are merely mixed to form a coating agent without milling. To improve the dispersibility, the metal thin film flinders are preferably surface-treated, as described above.

### 2. Metallic hologram

(1) Hologram sheet
   In the present invention, a commercially available hologram sheet can be used, which is obtained by laminating a transparent plastic film having a hologrammed surface onto a base film, such as a transparent polyester film, in a manner such that the surface opposite to the hologrammed surface of the transparent plastic film is brought into contact with a surface of the base film.
(2) Formation of light reflecting layer
   The light reflecting layer in the present invention is formed by coating or printing with a high brightness coating agent on the hologrammed surface of a hologram sheet. A metallic hologram having a large area, which conventionally has required large equipment for deposition or sputtering of the metal, can now be mass-produced quickly at a low cost by a coating or printing method.
   Examples of the coating method include common coating methods such as roll coating, gravure coating, curtain coating, spray coating and die coating methods. It is one of the principle features of the present invention that printing methods such as gravure printing, flexographic printing and screen printing methods can be used, in addition to the above methods. When coating by the printing method, since a printing plate is used, it is possible to produce not only metallic hologram covering the entire surface, but also a partial metallic hologram in which an arbitrary pattern has been formed at an arbitrary position. Therefore, the metallic hologram of the present invention can be used not only for identification, but also for decoration by design of the pattern of the hologram.
(3) Formation of non-hologram region
   It is possible to form a partial hologram by printing an arbitrary pattern on the hologrammed surface with a transparent varnish so as to prevent the part of the surface covered with the arbitrary pattern of the transparent varnish from functioning as a hologram. As a result, according to the present invention, it is possible to form, on the same face of a hologram sheet, (i) a metallic hologram region having a light reflecting layer, (ii) a transparent hologram region having no light reflecting layer, (iii) a transparent region having neither a light reflecting layer, nor a hologram function and (iv) a metallic region having a light reflecting layer and no hologram function, with an arbitrary position and an arbitrary shape, thereby noticeably improving the freedom of design.
   On the transparent regions (ii) and (iii), text or color images can be printed. In case of the metallic hologram sheet of the present invention, it is made possible to print on one and/or both surfaces. In the case of laminating on the base after printing one surface, it is preferred to print on the hologrammed surface in order to achieve reverse printing. In this case, publicly known conventional printing methods such as letterpress printing, lithographic printing, gravure printing, flexographic printing and screen printing methods can be used as required. The same effect can be obtained by laminating a metallic hologram having a transparent region on a base wherein text or images have previously been printed at the position corresponding to the transparent region. Such an effect can be obtained only by the method capable of forming a light reflecting layer by printing according to the present invention.
   The transparent varnish used to form the non-hologram region can be one which has commonly been used in conventional gravure ink. Specific examples thereof include transparent varnishes composed of binder resins such as (meth)acrylic resin, polyester, polyamide, polyurethane, urea resin, melamine resin, epoxy resin, rosin-modified maleic acid resin, petroleum resin, polystyrene, styrene-maleic acid resin, shellac, and alkyd resin; additives such as coloring pigments, dyes, waxes, plasticizers, levelling agents, surfactants, dispersants, defoamers, and chelating agents; and solvents such as aromatic hydrocarbon (e.g., toluene, xylene, etc.), aliphatic or alicyclic hydrocarbon (e.g., n-hexane, cyclohexane, etc.), esters (e.g., ethyl acetate, propyl acetate, etc.), alcohols (e.g., methanol, ethanol, isopropyl alcohol, etc.), ketones (e.g., acetone, methyl ethyl ketone, etc.), and alkylene glycol monoalkyl ethers (e.g., ethylene glycol monoethyl ether, propylene glycol monomethyl ether, etc.).
3. Uses of the metallic hologram of the present invention

The metallic hologram of the present invention can be used as an identification mark to prevent forgery, or as a decorative means in magnetic cards, bankbooks, securities, certification documents, packaging films, decorative films, packaging containers, tags, posters, signboards, adhesive products (e.g., labels, stickers, adhesive sheets, adhesive tapes, etc.), in-mold labels, stationery goods (e.g., covers and cases of books), office supplies, household appliances, fancy goods, toys, furniture, building materials (e.g., wallpaper, decorative paper, etc.), automobile parts, and appliances because a partial hologram can be formed easily at a low cost.

The present invention will now be described in detail by way of Examples. In the following Examples, parts and percentages are by weight unless otherwise specified.

### <Preparation of high brightness coating agent>

(1) Aluminum thin film flinders
Nitrocellulose (HIG7) was dissolved in a mixed solvent of ethyl acetate and isopropyl alcohol in a ratio of 6:4 to prepare a 6% solution. The resulting solution was coated onto a polyester film using a gravure printing plate (screen: 175 lines/inch, depth of cells: 25 µm) to form a release layer. After sufficient drying, aluminum was deposited on the release layer to a thickness of 0.04 µm and the same nitrocellulose solution as that used in the release layer was coated on the surface of the deposited layer under the same conditions as for the case of the release layer to form a top coat layer.
The aluminum-deposited film was dipped into a mixed solution of ethyl acetate and isopropyl alcohol in a ratio of 6:4, and after removing the deposited layer of aluminum from the polyester film, the deposited layer of aluminum was ground by a stirrer to form aluminum thin film flinders having a size of about 150 µm.
(2) Slurry of aluminum thin film flinders

| | |
|---|---|
| Slurry of aluminum thin film flinders | 10 parts |
| Ethyl acetate | 35 parts |
| Methyl ethyl ketone | 30 parts |
| Isopropyl alcohol | 30 parts |

The components were mixed and 5 parts of a nitrocellulose solution with the following composition was added with stirring.

| | |
|---|---|
| Nitrocellulose (HIG 1/4) | 25% |
| Mixed solvent of ethyl acetate and isopropyl alcohol in a mixing ratio of 6:4 | 75% |

The resulting mixture was stirred while maintaining the temperature at 35°C or lower using a turbo mixer to within a range from about 10 to 15 µm to prepare a slurry of aluminum thin film flinders.
(3) High brightness coating agent

| | | |
|---|---|---|
| Slurry of aluminum thin film flinders | | 30 parts |
| Urethane resin ("BURNOCK L7-617", manufactured by DAINIPPON INK & CHEMICALS, Inc.) | | 30 parts |
| Chlorinated polypropylene ("SUPERCHLON 803M", manufactured by NIPPON PAPER INDUSTRIES) | | 2 parts |
| Polyethylene wax compound with the following composition | | 3 parts |
| "HI-WAX 210P" manufactured by MITSUI CHEMICALS | 20% | |
| Nitrocellulose (HIG7) | 10% | |
| Ethyl acetate | 70% | |
| Ethyl acetate | | 30 parts |

The components described above were mixed to prepare a high brightness coating agent.

### <Gravure printing plate>

The gravure printing plate for coating with a high brightness coating agent or a transparent varnish on the partial or entire surface to be hologrammed of a hologram sheet was as follows.
Gravure plate engraver: "HelioKlischograph K500", manufactured by HELL Gravure Systems Inc.
Screen: 175 lines/inch
Depth of cells: 25 - 30 µm
Stylus angle: 120°

For a high brightness coating agent and a transparent varnish, gravure printing plates having different patterns or solid gravure printing plates were produced.

### (Example 1)

### <Packaging material to which partial metallic hologram is laminated>

Using a gravure printing plate, a transparent varnish ["UNIVURE A, transparent medium (Zahn cup No. 3, 16 seconds)" manufactured by DAINIPPON INK & CHEMICALS, Inc.] was printed on a commercially available hologram sheet (base film: 30 µm thick polyester film) first to form a non-hologram region, and then a high brightness coating agent was printed to form a metallic hologram region. A dry laminating adhesive (prepared by adding 1 part of a curing agent "KR90" manufactured by DAINIPPON INK & CHEMICALS, Inc. to 15 parts of "DIC DRY LX703A" manufactured by DAINIPPON INK & CHEMICALS, Inc.) was coated onto the resulting partial metallic hologram in a dry coating weight of 3 g/m², and then a surface-treated polypropylene film (CPP having a thickness of 30 µm) was dry-laminated thereon to obtain a packaging material to which the partial metallic hologram was laminated.

### (Example 2)

### <Heat-sensitive label with partial metallic hologram>

Using a gravure printing plate, a high brightness coating agent was printed on a commercially available hologram sheet (base film: 30 µm thick polyester film) to form a metallic hologram region, and then a high brightness coating agent was printed to form a metallic hologram region, and then a transparent varnish ["SBL-X, transparent medium (Zahn cup No. 3, 16 seconds) manufactured by DAINIPPON INK & CHEMICALS, Inc.] was printed thereon using a solid printing plate to a form non-hologram region at the portion other than the metallic hologram region. A heat-sensitive adhesive ("DIC SEAL DLA-820", manufactured by DAINIPPON INK & CHEMICALS, Inc.) was coated on the surface printed with the transparent varnish of the resulting partial metallic hologram in a coating weight of 2 g/m² to obtain a heat-sensitive label of the partial metallic hologram.

### (Example 3)

### <In-mold label with partial metallic hologram>

In the same manner as in Example 2, except that a mixture prepared by adding 5% of "CLV HARDENER No. 10" manufactured by DAINIPPON INK & CHEMICALS, Inc. to "FINELAP NTV" transparent medium (Zahn cup No. 3, 16 seconds) manufactured by DAINIPPON INK & CHEMICALS, Inc. was used in place of "SBL-X" transparent medium (Zahn cup No. 3, 16 seconds) manufactured by DAINIPPON INK & CHEMICALS, Inc., a partial metallic hologram was made. An in-molding adhesive ("DIC SEAL IM-1900", manufactured by DAINIPPON INK & CHEMICALS, Inc.) was coated onto the surface printed with the high brightness coating agent and the transparent varnish of the resulting partial metallic hologram in a coating weight of 3 g/m² to obtain an in-mold label with a partial metallic hologram.

### (Example 4)

### <Cap material with partial metallic hologram>

In the same manner as in Example 3, a partial metallic hologram was made. The laminating adhesive described in Example 1 was coated onto the surface printed with the high brightness coating agent and the transparent varnish of the resulting partial metallic hologram in a coating weight of 3 g/m² and, after dry-laminating on an aluminum foil having a thickness of 15 µm, a cap sealing agent ("DIC SEAL A-930", manufactured by DAINIPPON INK & CHEMICALS, Inc.) was coated onto the aluminum foil surface in a coating weight of 2 g/m² to obtain a cap material with a partial metallic hologram.

### (Example 5)

### <Shrink label with partial metallic hologram>

In the same manner as in Example 3, except for using a commercially available hologram sheet which uses, as a base film, a shrink polyester film wherein the thickness of a base film is 40 µm, a partial metallic hologram was made to obtain a shrink label with a partial metallic hologram.

## Claims

1. A metallic hologram comprising a light reflecting layer, wherein the light reflecting layer is formed by coating or printing with a high brightness coating agent.

2. The metallic hologram according to claim 1, wherein the high brightness coating agent contains a binder resin and metal thin film flinders.

3. The metallic hologram according to claim 2, wherein the metal thin film flinders are surface-treated with an organic fatty acid, methylsilyl isocyanate or a cellulose derivative.

4. The metallic hologram according to claim 1, wherein the light reflecting layer is formed in a pattern having an arbitrary shape.

5. The metallic hologram according to claim 1, wherein the hologram region is formed in a pattern having an arbitrary shape.

6. A method of producing a metallic hologram comprising a light reflecting layer, which comprises forming the light reflecting layer by coating with a high brightness coating agent.

7. The method of producing a metallic hologram according to claim 6, wherein the light reflecting layer is formed in a pattern having an arbitrary shape by printing with a high brightness coating agent.

8. The method of producing a metallic hologram according to claim 6, wherein the hologram region is formed in a pattern having an arbitrary shape by printing a transparent varnish.

9. The method of producing a metallic hologram according to claim 7, wherein the hologram region is formed in a pattern having an arbitrary shape by printing a transparent varnish.
